# EUROPÄISCHE PATENTSCHRIFT

(11) **EP 2 317 297 B1**
(45) Veröffentlichungstag und Bekanntmachung des Hinweises auf die Patenterteilung: **06.01.2016**
(21) Anmeldenummer: 10007561.3
(22) Anmeldetag: 21.07.2010
(51) Int. Cl.: G01L 9/00, G01L 19/04

(54) **Messzelle**
Measuring cell
Cellule de mesure

(30) Priorität: 02.11.2009 DE 102009051613
(43) Veröffentlichungstag der Anmeldung: 04.05.2011
(73) Patentinhaber: VEGA Grieshaber KG, 77709 Wolfach (DE)
(72) Erfinder: Gruhler, Holger, 78609 Tuningen (DE)
(74) Vertreter: Westphal, Mussgnug & Partner Patentanwälte mbB

(56) Entgegenhaltungen:
- EP-A1- 1 884 757
- EP-A2- 0 210 843
- WO-A1-83/04308
- DE-A1- 3 820 418
- US-A- 4 227 418
- US-A- 4 924 701
- US-A- 6 122 972
- US-A1- 2008 223 140

## Beschreibung

Die Erfindung betrifft eine Messzelle gemäß dem Oberbegriff des Patentanspruchs 1.

Aus dem Stand der Technik sind derartige Messzellen beispielsweise als Druckmesszellen zur kapazitiven Detektion eines extern an der Messzelle anliegenden Druckes bekannt. Eine solche kapazitive Druckmesszelle weist einen Grundkörper, und eine an dem Grundkörper angeordnete Messmembran auf, wobei an den zueinander gewandten Flächen der Messmembran und des Grundkörpers zur Bildung einer Kapazität flächige Elektroden angeordnet sind. Bei einer Druckeinwirkung auf die Messmembran ändert sich der Abstand zwischen der Messmembran und dem Grundkörper und damit die Kapazität des durch die Messelektroden gebildeten Kondensators, so dass eine Detektion des einwirkenden Druckes möglich ist.

Weitere Messzellen sind zum Beispiel aus WO 83/04308 A1, DE 38 20 418 A1 und US 4 924 701 A bekannt.

Bei nach diesem Prinzip aufgebauten Messzellen ist es problematisch, dass es durch schnelle Temperaturänderungen, sogenannte Thermoschocks, beispielsweise einen Temperatursprung von 20°C auf 80°C, und aufgrund eines relativ langsamen Temperaturausgleichs innerhalb der Messzelle zu strukturmechanischen Verformungen der Messzelle kommt, die aufgrund einer daraus resultierenden Durchbiegung der Messmembran eine Änderung des Messwerts bewirken, obwohl keine Druckänderung stattfindet. Bei langsamen Temperaturänderungen gleichen sich die Temperaturniveaus durch Wärmeleitung über eine Glaslotverbindung zwischen der Messmembran und dem Grundkörper aus, so dass keine Verformungen der Messzelle und insbesondere der Messmembran verursacht werden. Bei schnellen Temperaturwechseln, wie sie beispielsweise bei einem Thermoschock auftreten, erfolgt der Temperaturausgleich zwischen Messmembran und Grundkörper jedoch erst nach längerer Zeit, so dass sich in Folge des Temperaturgradienten die Messmembran in Bezug zum Grundkörper verformt, sich die Kapazitätsverhältnisse im Inneren der Zelle ändern und eine Druckänderung vorgetäuscht wird.

Zur Kompensation solcher Fehlmessungen ist es aus dem Stand der Technik, beispielsweise aus der EP 1 186 875 B1, bekannt, in einer Glaslotverbindung, mittels der die Messmembran an dem Grundkörper angeordnet ist, einen Temperatursensor zur Erfassung von Temperaturänderungen anzuordnen. Durch diesen Temperatursensor wird es möglich, Temperaturänderungen mit steilem Temperaturgradienten und tatsächliche Druckänderungen zu unterscheiden und die ausgegebenen Messwerte mit Hilfe einer elektronischen Verarbeitung zu kompensieren.

Nach firmeninternem Stand der Technik wird außerdem versucht, anhand einer Biegelinie der Messmembran und der dadurch veränderten Kapazitätswerte einen erfolgten Thermoschock zu erkennen und den falschen Messwert anschließend zu korrigieren.

An den oben genannten Kompensationsmethoden ist es jedoch nachteilig, dass das Vorliegen eines Thermoschocks erst anhand falscher Messwerte erkannt wird und daher eine sehr schnelle Signalverarbeitung für die Messwerte notwendig ist. Problematisch ist außerdem, dass es nicht möglich ist, zeitlich überlagerte Ereignisse, wie z. B. die Überlagerung eines Druckstoßes mit einem Thermoschock, zuverlässig zu erkennen und zu verarbeiten.

Es ist die Aufgabe der Erfindung eine Messzelle der oben genannten Art derart weiterzubilden, dass die Auswirkungen von Thermoschocks und daraus resultierende Messfehler reduziert werden.

Diese Aufgabe wird gelöst durch eine Messzelle mit den Merkmalen des Patentanspruchs 1.

Bevorzugte Weiterbildungen dieser Messzelle sind Gegenstand der Unteransprüche.

Eine erfindungsgemäße Messzelle weist eine an dem Grundkörper angeordnete Messmembran sowie eine Messeinrichtung auf, wobei ein Zwischenraum zwischen der Messmembran und dem Grundkörper mit einem Gas mit gegenüber Luft erhöhter Wärmeleitfähigkeit gefüllt ist, das Gas ein Edelgas, insbesondere Helium, oder Wasserstoff ist und eine Druckausgleichsvorrichtung vorgesehen ist, die über einen Kanal mit einem Zwischenraum verbunden ist, wobei die Druckausgleichsvorrichtung als eine mittels einer Verbindungsschicht mit dem Grundkörper verbundene Druckausgleichsmembran ausgebildet ist. Erfindungsgemäß weist die Messeinrichtung ein erstes Messelement und ein zweites Messelement auf, wobei das erste Messelement an der Messmembran und das zweite Messelement an dem Grundkörper angeordnet ist.

Dadurch, dass das Gas in dem Zwischenraum eine erhöhte Wärmeleitfähigkeit aufweist, werden durch einen Thermoschock induzierte Temperatursprünge schneller von der Messmembran auf den Grundkörper der Messzelle übertragen, so dass strukturmechanische Verspannungen in der Messzelle schneller abgebaut werden können bzw. aufgrund des geringeren Temperaturgradienten in ihrer Größe reduziert sind.
Um für Verschiebungen der Messmembran keinen Widerstand darzustellen ist es günstig, wenn das in den Zwischenraum eingefüllte Fluid kompressibel ist. Es ist daher vorteilhaft, wenn als Fluid ein Gas in den Zwischenraum eingefüllt ist. Bei den eingesetzten Materialien sind die Wärmeleitfähigkeit, das elektrische- und Isolationsverhalten sowie der Einfluss auf das dynamische Verhalten der Messzelle zu beachten. Aufgrund ihrer geringen Reaktivität können bevorzugt Edelgase zum Einsatz kommen. In der Hauptgruppe der Edelgase hat sich Helium als besonders geeignet herausgestellt, da es eine ähnliche Permitivität wie Luft und eine in etwa 6-fach höhere Wärmeleitfähigkeit aufweist. Aufgrund seiner etwa 7-fach höheren Wärmeleitfähigkeit im Vergleich zur Luft, könnte sich als weiteres Gas Wasserstoff zur Füllung des Zwischenraums eignen. Aufgrund der hohen Reaktivität von Wasserstoff und aufgrund der hohen Diffusionsneigung dieses Gases sind die Einsatzgebiete für Wasserstoff jedoch begrenzt.

Durch eine derartige Druckausgleichsvorrichtung kann gewährleistet werden, dass im Inneren der Messzelle isobare Verhältnisse herrschen, so dass externe Druckeinwirkungen jeweils identisch erfasst werden. Die Druckausgleichsvorrichtung kann beispielsweise rückseitig an der Messzelle, d. h. an der zur Messeinrichtung gegenüberliegenden Seite der Messzelle, angeordnet sein und ist mit einem durch den Grundkörper der Messzelle führenden Kanal mit dem Zwischenraum zwischen der Messmembran und dem Grundkörper verbunden sein. Durch eine rückseitige Anordnung der Druckausgleichsvorrichtung kann erreicht werden, dass das vorderseitige Bauvolumen der Messzelle konstant gehalten werden kann und dennoch die Vorteile einer Druckausgleichsvorrichtung genutzt werden können.

Die Messelemente können beispielsweise als Messelektroden in Form von gleichgroßen flächigen Metallisierungen ausgebildet sein und eine Messkapazität zur Detektion von Verschiebungen der Messmembran gegenüber dem Grundkörper bilden. Eine so gebildete kapazitive Messzelle kann beispielsweise als Druckmesszelle eingesetzt werden, und ist im Grundaufbau nach aus dem Stand der Technik sehr gut erforscht und daher für eine breite Zahl von Anwendungen einsetzbar.

In einer Weiterbildung der Erfindung sind um die Messelektroden ringförmig ausgebildete Messelektroden angeordnet, mittels derer eine Referenzkapazität gebildet ist. Bei einer kreisförmig ausgebildeten Membran können diese Referenzelektroden in einem Randbereich, nahe einer Verbindung zwischen dem Grundkörper und der Messmembran, die beispielsweise über einen Lotring erfolgen kann, angeordnet sein, so dass der Wert für die Referenzkapazität auch bei strukturmechanischen Verformungen der Messzelle bzw. der Membranen weitgehend konstant bleibt. Mit Hilfe der Referenzkapazität ist es möglich, den Wert einer Messkapazität zu normalisieren und dadurch einen dimensionslosen und von produktionsbedingten Schwankungen eines Spaltabstands zwischen der Messmembran und dem Grundkörper sowie von langsamen oder quasistatischen Temperaturänderungen unabhängigen Messwert zu erzeugen.

### Gas

Zwischen der Druckausgleichsmembran und dem Grundkörper kann ein weiterer Zwischenraum ausgebildet sein, so dass ein Volumen der Druckausgleichsvorrichtung dadurch erhöht wird. Eine derartige Druckausgleichsmembran kann Druckschwankungen im Inneren der Messzelle dynamisch ausgleichen und damit für konstante Druckverhältnisse im Inneren der Zelle sorgen.

GasZur weiteren Reduktion von Einflüssen eines Thermoschocks ist es möglich, dass zwischen der Messmembran und dem Grundkörper eine Zwischenmembran vorgesehen ist, wobei das erste Mess-element weiterhin an der Messmembran angeordnet ist. Das zweite Messelement sitzt an der Zwischenmembran und ist damit an einem Element der Messzelle angeordnet, das thermisch bedingte Verformungen in gleicher Weise wie die Messmembran erfährt, so dass dadurch thermisch induzierte Messfehler weitestgehend vermieden werden können.

Die Erfindung wird nachfolgend anhand von Ausführungsbeispielen unter Bezugnahme auf die beigefügten Figuren eingehend erläutert.

Es zeigen:
- Figur 1: ein erstes Ausführungsbeispiel einer erfindungsgemäßen Messzelle mit einer Druckausgleichsmembran als Druckausgleichsvorrichtung,
- Figur 2: einen Vergleich der Temperaturverteilung innerhalb einer Messzelle nach dem Stand der Technik und einer erfindungemäßen Messzelle 8,2 Sekunden nach einem Thermoschock,
- Figur 3: einen Vergleich der Änderung des kapazitiven Spalts über der Zeit für verschiedene Füllmedien,
- Figur 4: einen Vergleich der Temperaturentwicklung an der Messmembran sowie an der Oberseite des Grundkörpers für Luft und Helium als Füllmedium,
- Figur 5: einen Vergleich der maximalen Axialverschiebung der Messmembran sowie der Grundkörperoberseite für Luft und Helium,
- Figur 6: die Entwicklung des Messwerts über der Zeit für eine Messzelle nach dem Stand der Technik sowie eine erfindungsgemäße Messzelle, und
- Figur 7: eine erfindungsgemäße Messzelle mit zusätzlicher Zwischenmembran.

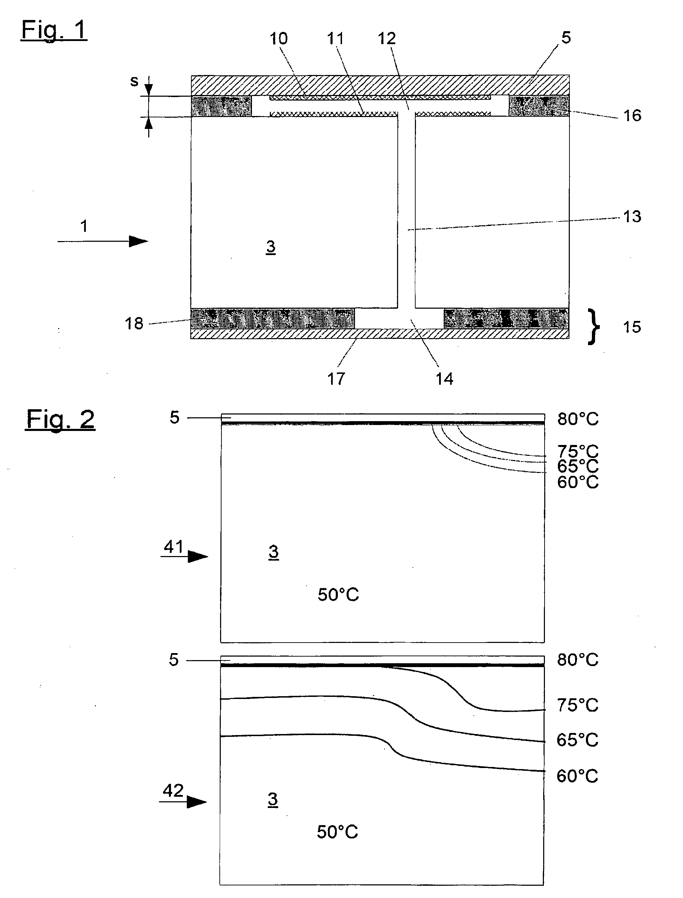

Figur 1 zeigt ein erstes Ausführungsbeispiel einer erfindungsgemäßen Messzelle 1 mit einem Grundkörper 3, einer über einen Lotring 16 an dem Grundkörper 3 angeordneten Messmembran 5 sowie an der Messmembran 5 sowie dem Grundkörper 3 angeordneten Messelektroden 10, 11. Ein zwischen der Messmembran 5 und dem Grundkörper 3 gebildete Zwischenraum 12 ist über einen Kanal 13 mit einer Druckausgleichsvorrichtung 15 verbunden, die in diesem Ausführungsbeispiel durch eine Druckausgleichsmembran 17, die über eine Verbindungsschicht 18 mit der Rückseite des Grundkörpers 3 verbunden ist, gebildet wird. Die Druckausgleichsvorrichtung 15 weist einen weiteren Zwischenraum 14 zwischen der Druckausgleichsmembran 17 und der Rückseite des Grundkörpers 3 auf, der zur Gewährleistung isobarer Druckverhältnisse im Inneren der Messzelle 1 dient. Sowohl der Zwischenraum 12 als auch der weitere Zwischenraum 14 sind mit einem Gas mit gegenüber Luft erhöhter Wärmeleitfähigkeit κ gefüllt.

Zur Detektion eines auf die Messmembran 5 einwirkenden Drucks bilden die an der Messmembran 5 und dem Grundkörper 3 angeordneten Messelektroden 10, 11 eine Messkapazität C_{M}, deren Größe durch die Fläche der Messelektroden 10, 11, die Permitivität des zwischen den Messelektroden 10, 11 befindlichen Mediums sowie den durch den Lotring 16 bestimmten Spaltabstand s bestimmt ist. Bei einem Radius der Messelektroden 10, 11 im Bereich von 5 bis 6 mm und einem Spaltabstands von etwa 16 *µ*m liegt der Wert der Messkapazität C_{M} bei etwa 50 pF. Durch eine Druckeinwirkung auf die Messmembran 5 ändert sich der Spaltabstand s zwischen den Messelektroden 10, 11, so dass über eine Kapazitätsänderung der von Außen einwirkende Druck bestimmbar ist. Aufgrund eines Thermoschocks, beispielsweise eines Temperatursprungs von 20°C auf 80°C in weniger als einer Sekunde kann es zu strukturmechanischen Verformungen der Messzelle 1 kommen. Diese Verformungen ϑ treten auf, da sich die Messmembran 5 unter der höheren Temperatur stärker als der Grundkörper 3 ausdehnt und aufgrund ihrer Radialbefestigung zum Ausgleich dieser Spannungen eine Wölbung nach außen erfährt. Durch die Wölbung der Messmembran 5 vergrößert sich der Spaltabstand s zwischen der Messmembran 5 und dem Grundkörper 3 bei einer Luftgefüllten Messzelle 1 um bis zu 2,1 *µ*m, so dass aufgrund des Temperaturschocks von der Messzelle 1 ein vermeintlicher Druckabfall detektiert wird. Durch Füllung des Zwischenraumes 12 mit Helium kann einerseits erreicht werden, eine maximale Spaltänderung Δsₘₐₓ von 2,1 *µ*m auf 1,5 *µ*m zu reduzieren und andererseits zu bewirken, dass eine thermisch bedingte Vergrößerung des Spaltabstandes s schneller ausgeglichen wird.

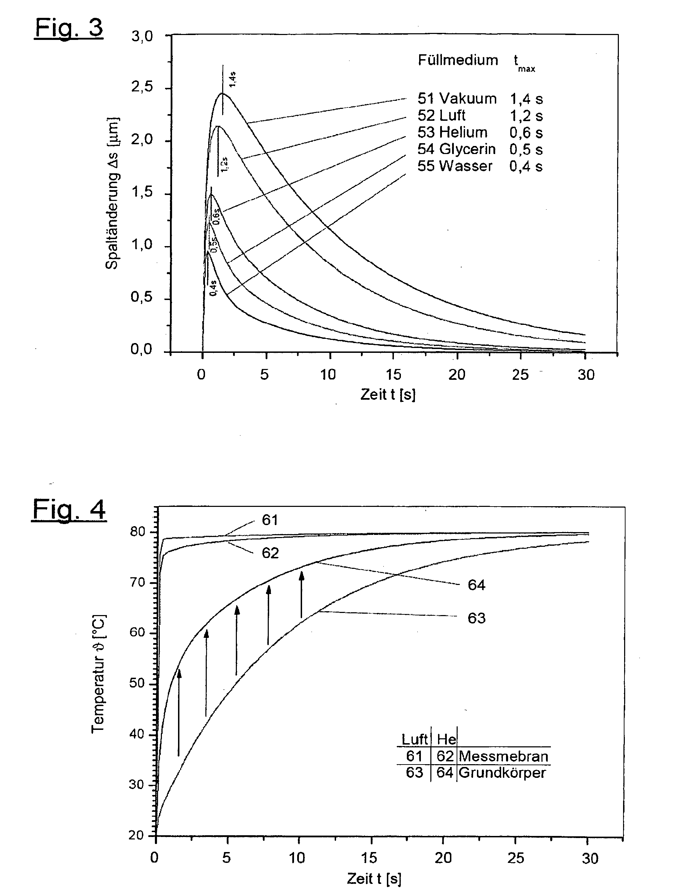

Wie in Figur 3 dargestellt, kann durch eine Füllung des Zwischenraums 12 mit Helium die Spaltänderung Δs von ihrem Maximalwert von Δsₘₐₓ = 1,5 *µ*m innerhalb von etwa 7 Sekunden auf 0,5 *µ*m zurückgeführt werden, wohingegen bei einer Luftgefüllten Messzelle für eine Rückführung der Spaltänderung Δs auf 0,5 *µ*m mehr als 15 Sekunden benötigt werden. Wie Figur 3 zu entnehmen ist, kann der Maximalwert der Spaltänderung Δsₘₐₓ bei einer Füllung mit Glyzerin oder Wasser noch weiter reduziert werden, diese Füllstoffe eignen sich jedoch aufgrund der Inkompressibilität von Flüssigkeiten weniger als Gase für die Verwendung in Druckmesszellen 1.

Figur 2 zeigt einen Vergleich der Temperaturverteilung 8,2 Sekunden nach Einwirken eines Thermoschocks, im vorliegenden Beispiel eines Temperatursprungs von 20°C auf 80°C, wobei mit dem Bezugszeichen 41 die schematische Darstellung einer mit Luft gefüllten Messzelle 1 und mit dem Bezugszeichen 42 die schematische Darstellung einer mit heliumgefüllten Messzelle 1 bezeichnet ist. Die schematischen Darstellungen 41, 42 zeigen einen zentrischen Schnitt durch die Messzelle 1 senkrecht zur Messmembran 5. Gezeigt ist eine halbe Messzelle 1, wobei die Darstellung vom Zentrum der Messzelle, das links angeordnet ist, zum Rand der Messzelle, d. h. dem Bereich in dem der Lotring 16 sitzt, auf der rechten Seite, führt.

Wie der Darstellung 41 entnommen werden kann, erfolgt eine Temperaturausbreitung ausgehend von der Messmembran 5, auf die der Thermoschock einwirkt, hauptsächlich über den Lotring 16, so dass sich ein Temperaturprofil ergibt, bei dem sich ausgehend von dem Lotring 16 elypsenförmig Isothermen in dem Grundkörper 3 der Messzelle 1 ausbreiten.

Bei der in Darstellung 42 gezeigten heliumgefüllten Messzelle 1 ist deutlich zu erkennen, dass zum gleichen Zeitpunkt wie in der oberen Darstellung die Isothermen wesentlich weiter in den Grundkörper 3 fortgeschritten sind, und dass eine Ausbreitung der Isothermen nicht nur ausgehend von der Verbindung über den Lotring 16, sondern auch ausgehend von dem heliumgefüllten Zwischenraum 12 erfolgt.

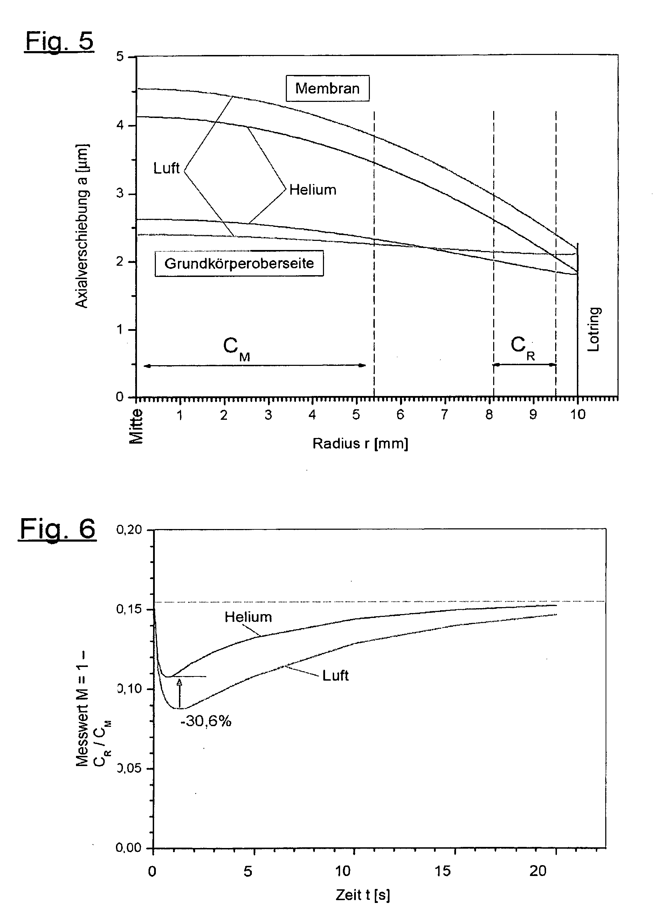

Diese schnellere Temperaturausbreitung in den Grundkörper 3, die sich insbesondere an der Oberseite des Grundkörpers 3, d. h. im Bereich der zweiten Messelektrode 11 bemerkbar macht, ist zur Verdeutlichung in Figur 4 im Vergleich zu einer Standard-Messzelle 1 dargestellt. Der Temperaturverlauf in Figur 6 ist jeweils im Zentrum der Messzelle 1 dargestellt. Die Kennlinien 61 und 63 bezeichnen den Temperaturverlauf bei einer luftgefüllten Messzelle 1, wobei die Kennlinie 61 den Temperaturverlauf im Zentrum der Messmembran 5 und die Kennlinie den Temperaturverlauf im Zentrum der Oberfläche des Grundkörpers 3 bezeichnet. Mit den Kennlinien 62 und 64 sind die Temperaturverläufe für eine heliumgefüllte Messzelle 1 bezeichnet, wobei die Kennlinie 62 den Verlauf im Zentrum der Messmembran 5 und die Kennlinie 64 entsprechend den Temperaturverlauf im Zentrum der Oberfläche des Grundkörpers 3 bezeichnet.

Bei einer luftgefüllten Messzelle 1 steigt die Temperatur ϑ mit der Messmembran 5 bei Einwirkung eines Thermoschocks sprungartig, im vorliegenden Beispiel in unter 1 Sekunde, auf 79°C an und nähert sich dann annähernd linear der maximale Temperatur ϑ von 80°C (vgl. Kennlinie 61). Die Temperatur ϑ an der Oberseite des Grundkörpers 3 steigt nur relativ langsam an und erreicht nach 10 Sekunden den Wert von etwa 62°C, nach 20 Sekunden einen Wert von etwa 73°C und nähert sich im verbleibenden Messbereich bis 30 Sekunden asymptotisch an dem Wert von 80°C an (vgl. Kennlinie 63).

Im Gegensatz dazu steigt die Temperatur ϑ der Messmembran 5 bei einer heliumgefüllten Messzelle 1 innerhalb der ersten Sekunde auf lediglich 75°C an, steigt bis 5 Sekunden nach Einwirken des Thermoschocks auf etwa 78°C und nähert sich dann bis etwa 15 Sekunden nach dem Thermoschock annähernd linear an den Maximalwert von 80°C an (vgl. Kennlinie 62). Aufgrund der erhöhten thermischen Leitfähigkeit κ des Heliums steigt die Temperatur 9 der Messmembran 5 nach einem Thermoschock also langsamer als bei einer herkömmlichen Messzelle an. Die Temperatur ϑ der Oberfläche des Grundkörpers 3 steigt im Vergleich zum Temperaturverlauf bei der luftgefüllten Messzelle 1 erheblich schneller an, so dass der Wert von 62°C, der bei der luftgefüllten Zelle erst nach 10 Sekunden erreicht wird, schon nach etwa 3 Sekunden erreicht wird und im weiteren Verlauf der Wert von 74°C bereits nach etwa 11 Sekunden erreicht wird (vgl. Kennlinie 64).

Die Auswirkungen auf die Spaltänderung Δs zwischen der Messmembran 5 und dem Grundkörper 3 sind in Figur 3 im Vergleich verschiedener Füllmedien dargestellt. In dem in Figur 3 gezeigten Diagramm ist der Verlauf der Spaltänderung Δs für verschiedene Füllmedien in einem Zeitbereich von 0 bis 30 Sekunden nach Einwirken des Thermoschocks aufgetragen. Außerdem sind in den einzelnen Kennlinien die Zeitpunkte tₘₐₓ, in denen eine maximale Spaltänderung Δsₘₐₓ erreicht wird, verzeichnet. Aus einem Vergleich der Kennlinien 52 und 53 für eine luftgefüllte und eine heliumgefüllte Messzelle 1 ist ersichtlich, dass die maximale Spaltänderung Δsₘₐₓ von etwa 2,2 µm auf 1,5 µm reduziert werden kann. Eine weitere Reduktion der maximalen Spaltänderung Δsₘₐₓ auf 1,25 *µ*m ist durch Verwendung von Glyzerin und auf 1,0 *µ*m durch Verwendung von Wasser als Füllmedium möglich. Ein Vergleich der Kennlinie 52 für eine luftgefüllte Messzelle 1 sowie der Kennlinie 53 für eine heliumgefüllte Messzelle 1 zeigt außerdem, dass die maximale Spaltänderung Δsₘₐₓ bei einer heliumgefüllten Messzelle 1 bereits nach einer Zeit tₘₐₓ von 0,6 Sekunden erreicht wir und nach diesem Zeitpunkt auch wesentlich schneller abfällt als bei der luftgefüllten Messzelle 1, bei der die maximale Spaltänderung Δsₘₐₓ erst nach einer Zeit tₘₐₓ von 1,2 Sekunden erreicht wird. Ein weiterer Vergleich der Kennlinien 52 und 53 zeigt, dass bei einer heliumgefüllten Messzelle 1 eine Rückführung der Spaltänderung Δs auf 0,25 µm bereits nach etwa 12,5 Sekunden erfolgt, wo hingegen bei einer luftgefüllten Messzelle 1 etwa 22,5 Sekunden für diese Rückführung benötigt werden.

Wie in Figur 5 ist eine Axialverschiebung a der Messmembran 5 und der Oberseite des Grundkörpers 3 zum Zeitpunkt der maximalen Spaltänderung Δsₘₐₓ, wie sie in Figur 5 ermittelt wurde, für eine luftgefüllte Messzelle 1 sowie für eine heliumgefüllte Messzelle 1 dargestellt. Die Axialverschiebung a ist ausgehend von der Mitte der Messzelle 1 radiusabhängig dargestellt und bis zum erreichen des Lotrings 16 nach 10 mm aufgetragen. In Figur 5 sind außerdem die Bereiche eingezeichnet, in denen die Messkapazität C_{M} sowie eine Referenzkapazität C_{R} bzw. die dafür vorgesehenen Mess- und Referenzelektroden 10, 11, 23, angeordnet sind. Mit Hilfe der Referenzkapazität C_{R}, die in einem Bereich nahe des Lotrings 16 angeordnet ist, indem sich der kapazitive Messspalt zwischen der Messmembran 5 und dem Grundkörper 3 nur wenig ändert, ist es möglich, den mittels der Messkapazität C_{M} ermittelten Kapazitätswert zu normalisieren und so einen Messwert M zu ermitteln, der unabhängig von produktionsbedingten Schwankungen des Messspalts sowie langsamen und quasi statischen Temperaturänderungen ist.

Wie dem Diagramm aus Figur 5 entnommen werden kann, ist die Axialverschiebung a bei einer heliumgefüllten Messzelle 1 für die Messmembran 5 geringer und die Grundkörperoberseite größer, so dass daraus die in Figur 3 dargestellte Verringerung der maximalen Spaltänderung Δsₘₐₓ resultiert.

Figur 6 zeigt schließlich eine Darstellung eines ermittelten Messwerts M = 1 - C_{R}/C_{M} einer luftgefüllten Messzelle 1 und einer heliumgefüllten Messzelle 1 nach einem Thermoschock im Vergleich. Wie in Figur 6 dargestellt, kann der maximale Einfluss des Thermoschocks durch Verwendung von Helium als Füllmedium über 30 % reduziert werden, so dass dadurch die Wahrscheinlichkeit von Messfehlern erheblich verringert wird.

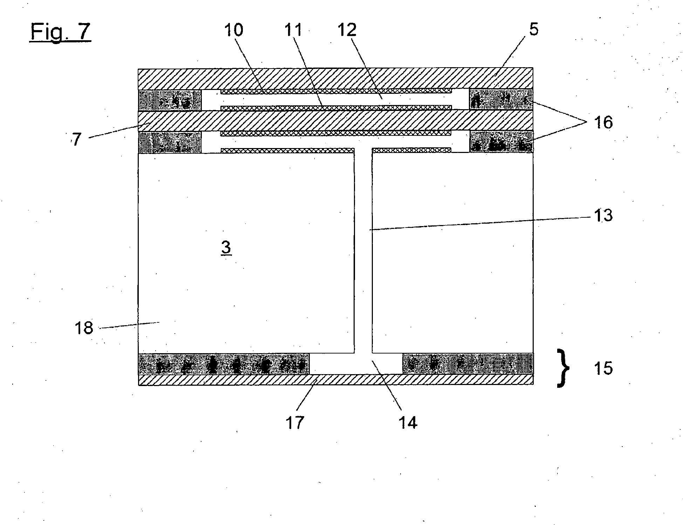

Figur 7 zeigt eine zusätzliche Weiterentwicklung der Messzelle 1 aus Figur 1, wobei zusätzlich zur Füllung des Zwischenraums 12 zwischen der Messmembran 5 und dem Grundkörper 3 eine Zwischenmembran 7 sowie weitere Elektroden 25 zur Detektion eines Thermoschocks vorgesehen sind. Durch die Zwischenmembran 7 können Einflüsse eines Thermoschocks auf die ermittelten Messwerte weiter reduziert werden, da aufgrund einer geringeren thermischen Masse der Zwischenmembran 7 diese thermischen Einflüsse wesentlich schneller als der Grundkörper 3 aufnimmt und daher in nahezu identischer Weise wie die Messmembran 5 erfährt. Die zwischen der Zwischenmembran 7 und dem Grundkörper 3 angeordneten weiteren Elektroden 25 können, da eine Druckeinwirkung auf die Messmembran 5 für die Zwischenmembran 7 ohne Auswirkungen bleibt, zur Detektion strukturmechanischer Verformungen aufgrund eines Thermoschocks herangezogen werden, so dass aufgrund der mit den weiteren Elektroden 25 ermittelten Messwerte eine zusätzlich Messwertkompensation möglich ist.

Um im Inneren der Messzelle 1 konstante Druckverhältnisse zu gewährleisten, ist es sinnvoll, wenn die Zwischenmembran 7 mit Durchbrüchen versehen ist, so dass das in den Zwischenraum 12 eingefüllte Fluid ungehindert zirkulieren und außerdem in die Druckausgleichsvorrichtung 15 strömen kann.

### Bezugszeichenliste

- 1: Messzelle
- 3: Grundkörper
- 5: Messmembran
- 7: Zwischenmembran

- 10: erste Messelektrode
- 11: zweite Messelektrode
- 12: Zwischenraum
- 13: Kanal
- 14: zweiter Zwischenraum
- 15: Druckausgleichsvorrichtung
- 16: Lotring
- 17: Druckausgleichsmembran
- 18: Verbindungsschicht

- 23: Referenzelektroden

- 41: erste Darstellung
- 42: zweite Darstellung

- a: Axialverschiebung
- a_{O}: Ruheposition
- C_{M}: Messkapazität
- C_{R}: Referenzkapazität
- κ: Wärmeleitfähigkeit
- M: Messwert
- Δs: Spaltänderung
- Δsₘₐₓ: maximale Spaltänderung
- t: Zeit
- ϑ: Temperatur

## Patentansprüche

1. Messzelle mit
- einem Grundkörper (3)
- einer Messmembran (5), die an dem Grundkörper (3) angeordnet ist,
- einer Messeinrichtung, wobei
ein Zwischenraum (12) zwischen der Messmembran (5) und dem Grundkörper (3) mit einem Gas gefüllt ist, und eine Druckausgleichsvorrichtung vorgesehen ist, die über einen Kanal (13) mit einem Zwischenraum (12) verbunden ist, **dadurch gekennzeichnet, dass** die Druckausgleichsvorrichtung (15) als eine mittels einer Verbindungsschicht (18) mit dem Grundkörper (3) verbundene Druckausgleichsmembran (17) ausgebildet ist,
die Messeinrichtung ein erstes Messelement (10) und ein zweites Messelement (11) aufweist, wobei das erste Messelement (10) an der Messmembran (5) und das zweiten Messelement (11) an dem Grundkörper (3) angeordnet ist, das gas hat gegenüber der luft eine erhöhter wärmeleitfähigheit (K) und ist ein Edelgas, insbesondere Helium, oder Wasserstoff ist.

2. Messzelle nach Anspruch 1,
**dadurch gekennzeichnet, dass** die Messelemente (10, 11) Messelektroden sind.

3. Messzelle nach Anspruch 2,
**dadurch gekennzeichnet, dass** die Messelektroden (10, 11) als gleichgroße, flächige Metallisierungen ausgebildet sind und eine Messkapazität (C_{M}) bilden.

4. Messzelle nach einem der vorhergehenden Ansprüche,
**dadurch gekennzeichnet, dass** ringförmig ausgebildete Referenzelektroden (23) zur Bildung einer Referenzkapazität (C_{R}) vorgesehen sind.

5. Messzelle nach einem der vorhergehenden Ansprüche,
**dadurch gekennzeichnet, dass** zwischen der Druckausgleichsmembran (17) und dem Grundkörper (3) ein zweiter Zwischenraum (14) ausgebildet ist.

6. Messzelle nach einem der vorhergehenden Ansprüche,
**dadurch gekennzeichnet, dass** zwischen der Messmembran (5) und dem Grundkörper (3) eine Zwischenmembran (7) vorgesehen ist und das erste Messelement (10) an der Messmembran (5) und das zweite Messelement (11) und er Zwischenmembran (7) angeordnet ist.

## Claims

1. Measuring cell comprising
- a base body (3)
- a measurement membrane (5), which is arranged on said base body (3)
- a measurement instrument, wherein
a clearance (12) between said measurement membrane (5) and said base body (3) is filled with a gas, and a pressure compensation device is provided, which is connected by a duct (13) to said clearance (12), **characterized in that** said pressure compensation device (15) is designed as a pressure compensation membrane (17) connected by means of a connection layer (18) to said base body (3), said measurement instrument has a first measuring element (10) and a second measuring element (11), wherein said first measuring element (10) is arranged on said measurement membrane (5) and said second measuring element (11) is arranged on said base body (3), said gas having an increased heat capacitance (K) compared to air and is a rare gas, in particular helium or hydrogen.

2. Measuring cell according to claim 1, **characterized in that** the measuring elements (10, 11) are measuring electrodes.

3. Measuring cell according to claim 2, **characterized in that** said measuring electrodes (10, 11) are designed as flat metallizations of identical size, and form a measuring capacitance (C_{M}).

4. Measuring cell according to any one of the above claims, **characterized in that** reference electrodes (23), having an annular shape, are provided for the formation of a reference capacitance (C_{R}).

5. Measuring cell according to any one of the above claims, **characterized in that** a second clearance (14) is formed between said pressure compensation membrane (17) and said base body (3).

6. Measuring cell according to any one of the above claims, **characterized in that** an intermediate membrane (7) is provided between said measurement membrane (5) and said base body (3) and said first measuring element (10) is arranged on said measurement membrane (5) and said second measuring element (11) is arranged on said intermediate membrane (7).

## Revendications

1. Cellule de mesure comprenant :
- un corps de base (3),
- une membrane de mesure (5) qui est montée sur le corps de base (3)
- un dispositif de mesure,
dans laquelle
- un espace intermédiaire (12) situé entre la membrane de mesure (5) et le corps de base (3) est rempli d'un gaz et il est prévu un dispositif d'équilibrage de pression qui est relié à un volume intermédiaire (12) par l'intermédiaire d'un canal (13),
**caractérisé en ce que**
le dispositif d'équilibrage de pression (15) est réalisé sous la forme d'une membrane d'équilibrage de pression (17) reliée au corps de base (3) au moyen d'une couche de liaison (18), le dispositif de mesure comprend un premier élément de mesure (10) et un second élément de mesure (11) le premier élément de mesure (10) étant monté sur la membrane de mesure (5) et le second élément de mesure (11) étant monté sur le corps de base (3), le gaz ayant une conductibilité supérieure à celle de l'air et étant un gaz noble, en particulier de l'hélium ou de l'hydrogène.

2. Cellule de mesure conforme à la revendication 1,
**caractérisée en ce que**
les éléments de mesure (10, 11) sont des électrodes de mesure.

3. Cellule de mesure conforme à la revendication 2,
**caractérisée en ce que**
les électrodes de mesure (10, 11) sont réalisées sous la forme de métallisations planes de même dimension et forment une capacité de mesure (C_{M}).

4. Cellule de mesure conforme à l'une des revendications précédentes,
**caractérisée en ce qu'**
il est prévu des électrodes de référence annulaires (23) pour former une capacité de référence (C_{R}).

5. Cellule de mesure conforme à l'une des revendications précédentes,
**caractérisée en ce qu'**
un second volume intermédiaire (14) est formé entre la membrane d'équilibrage de pression (17) et le corps de base (3).

6. Cellule de mesure conforme à l'une des revendications précédentes,
**caractérisée en ce qu'**
entre la membrane de mesure (5) et le corps de base (3) il est prévu une membrane intermédiaire (7) et le premier élément de mesure (10) est monté sur la membrane de mesure (5) tandis que le second élément de mesure (11) est monté sur la membrane intermédiaire (7).
